## Europäisches Patentamt
## European Patent Office
## Office européen des brevets

(11) Publication number: **0 151 887**
**A2**

(12) **EUROPEAN PATENT APPLICATION**

(21) Application number: **84309122.4**

(22) Date of filing: **28.12.84**

(51) Int. Cl.⁴: **G 06 F 1/00**
**G 12 B 9/02, G 01 D 11/24**

(30) Priority: **06.01.84 US 568713**

(43) Date of publication of application:
**21.08.85 Bulletin 85/34**

(84) Designated Contracting States:
**CH DE FR GB IT LI SE**

(71) Applicant: **LaFrance Corporation**
**Enterprise and Executive Avenues**
**Philadelphia Pennsylvania(US)**

(72) Inventor: **Peroni, Peter A.**
**1080 Morris Street**
**Pottstown Pennsylvania(US)**

(74) Representative: **Baillie, Iain Cameron et al,**
**c/o Ladas & Parry Isartorplatz 5**
**D-8000 München 2(DE)**

(54) Instrument housing.

(57) An instrument housing of the knockdown type includes a base member, a top member and a plurality of side members each of which is molded from a plastic material in the form of a generally flat panel. The members are detachably secured together to form the housing whereby the size and dimensions of the housing may be varied by selective replacement of some of the members and whereby the members may be shipped and stored in a flat condition in kit form.

Fig. 1

INSTRUMENT HOUSING

The present invention relates to a molded plastic housing and more particularly to a housing used for electronic instruments such as a cathode ray tube terminal enclosure or an instrument housing having a keyboard enclosure.  Such housings have been generally molded from a suitable plastic as a unit.  It is desirable, however, from a manufacturing standpoint if such a housing could be of the knockdown type whereby added versatility could be afforded in the size and dimensions of the housing and whereby storage and shipping would be simplified.

An object of this invention is to provide a molded plastic housing of the knockdown type which may be varied in size and dimension by selective replacement of some of the housing side members.

A further object of this invention is to provide such a housing wherein the individual side members are of generally flat shape so that the members may be shipped and stored in a flat condition in kit form.

In accordance with this invention, an instrument housing is in the form of the knockdown type which includes a base member and a top member as well as a plurality of side members.  Each of the members is molded from a plastic material in the form of a generally flat panel.  The members are detachably secured together so that the size and dimensions of the housing may be varied by selective replacement

CASE: LAF 16

of some of the members. Additionally the shape and detachable securement of the members permit the members to be shipped and stored in a flat condition in kit form.

The side members may include intermediate side members and front and rear side members. The housing may also be provided with a molded plastic keyboard unit secured at the front of the housing. The keyboard unit may itself be a detachable component.

## The Drawings

Figure 1 is a perspective view of an instrument housing in accordance with one embodiment of this invention;

Figure 2 is a side view of the instrument housing shown in Figure 1;

Figure 3 is a front view of the housing shown in Figures 1-2 with the keyboard unit removed;

Figure 4 is a side view of the housing shown in Figure 3;

Figures 5 and 6 are cross-sectional views taken through Figure 3 along the lines 5-5 and 6-6, respectively;

Figures 7 and 8 are cross-sectional views taken through Figure 4 along the lines 7-7 and 8-8, respectively;

Figure 9 is a top plan view of the portion of the housing shown in Figure 8;

Figure 10 is a front elevation view of the keyboard unit shown in Figures 1-2;

Figure 11 is a top plan view of the keyboard unit shown in Figure 10;

Figure 12 is a rear elevation view of the keyboard unit shown in Figures 10-11;

Figure 13 is a side elevation view of the keyboard unit shown in Figures 10-12; and

Figure 14 is a cross-sectional view taken through Figure 11 along the line 14-14 with the keyboard unit shown in exploded condition.

## Detailed Description

The instrument housing includes a number of individual side members molded from a suitable thermoplastic material. The individual plastic sides are detachably secured together thus permitting a wide variety of size and shape housings to be manufactured such as including or omitting a keyboard or by replacing respective sides with sides of other shapes or dimensions. Additionally because of the generally flat condition or form which the sides take, the housing components or sides could be shipped or stored in a flat condition in kit form for later assembly.

Novel means are provided for securing the sides together including the use of metal extrusions and novel fasteners.

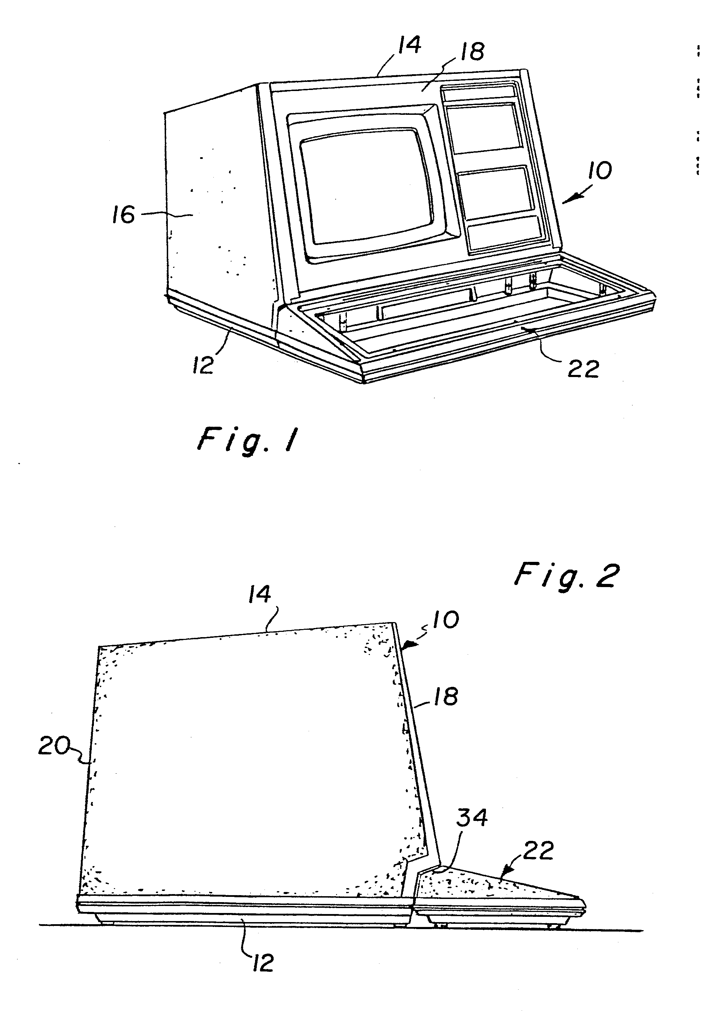

Figures 1-2 illustrate an instrument housing 10 which is particularly designed to function as a cathode ray tube terminal enclosure. As illustrated therein, housing 10 includes a base member 12, a top member 14 and a plurality of side members. The side members specifically include a pair of intermediate side members 16 as well as a front side member 18 and a rear side member 20. In addition housing 10 includes a keyboard unit 22. The housing may optionally omit a keyboard. Figures 1-2 illustrate the inclusion of keyboard unit 22 which is detachable from the main housing.

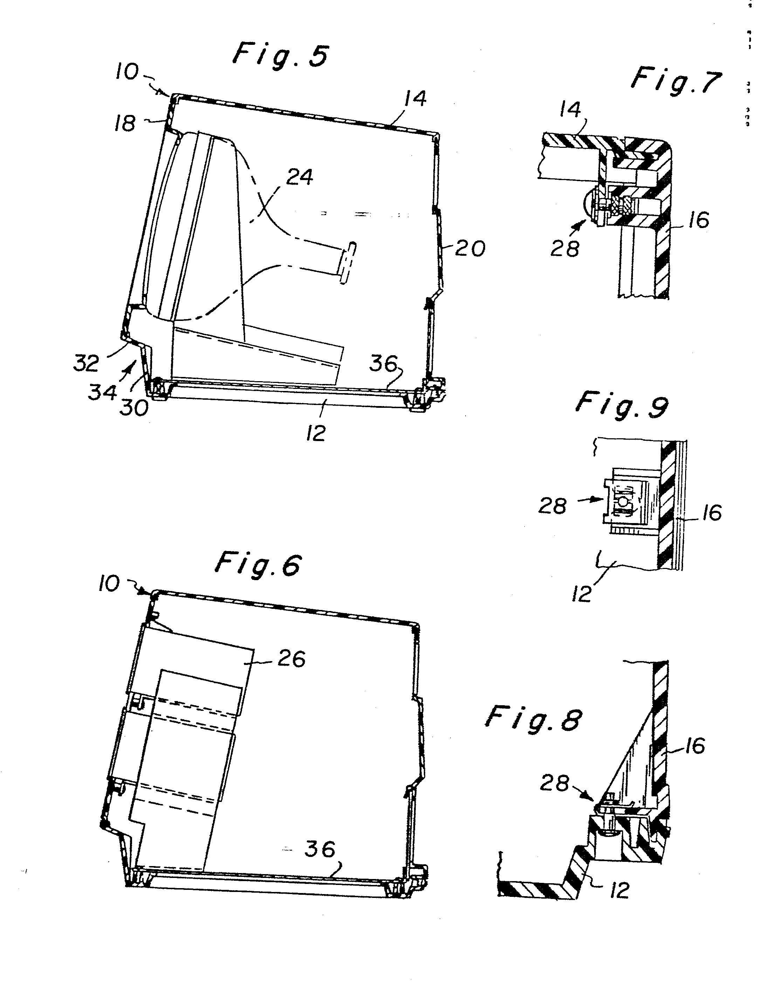

Figures 5-6 best illustrate how housing 10 functions as a cathode ray tube terminal enclosure. Figure 5, for example, illustrates the cathode ray tube 24 while Figure 6 illustrates the monitors and disc drive combinations 26. Figures 7-9 illustrate on an enlarged scale the interconnection of the various members by means of mating edges and grooves as well as by fastener assemblies 28. In this manner the members may be detached so that the size and shape of the housing can be altered by replacing selected members with other members of different size and/or shape. Additionally by detaching the members, it is possible to pack them in a generally flat condition thus simplifying shipping and storage requirements.

The terminal enclosure 10 is a modular unit that can be completely assembled in minutes. Various mounting configurations for subassemblies such as monitors and drives can be easily accommodated and firmly supported by modifying the metal chassis plate, included with the base.

Base member 12 includes an upstanding wall 30 terminating in a forwardly extending flange 32 to form a recess 24 in the front surface of housing 10 to provide a snug fit with the keyboard enclosure 22. For stand-alone units, this area 34 may be used for placement of controls, ventilation slots, or other design features.

Housing 10 may include an independent, recessed I/O panel to allow the entire shroud assembly to be removed without disconnecting inputs and outputs. In addition, required openings can be punched or machined easily and economically.

The front panel 18 can accommodate most conventional black and white or color monitors and disk drive combinations 26.

The housing 10 preferably is constructed of impact-resistant ABS panels that are strong yet light in weight. The use of 94V-0 listed flame retardant ABS helps meet the requirements of UL, CSA, and other agencies.

The front panel 18 is particularly versatile. Standard panels can be injection-molded with two horizontal 5 1/4 inch disk drive openings and a molded-in bezel that can accommodate up to a 12 inch or 13 inch CRT. If drive openings are not required, a designer panel that complements the front panel can be inserted. This too can be modified for special design requirements. Any area of the front panel can be customized to serve design specifications for internal components, exterior controls, or easy access of serviceability.

Another flexible feature of the housing 10 is the easily modified metal chassis plate 36. Mounting holes, stand-offs, or louvers, etc. can be provided to meet specifications for component mounting.

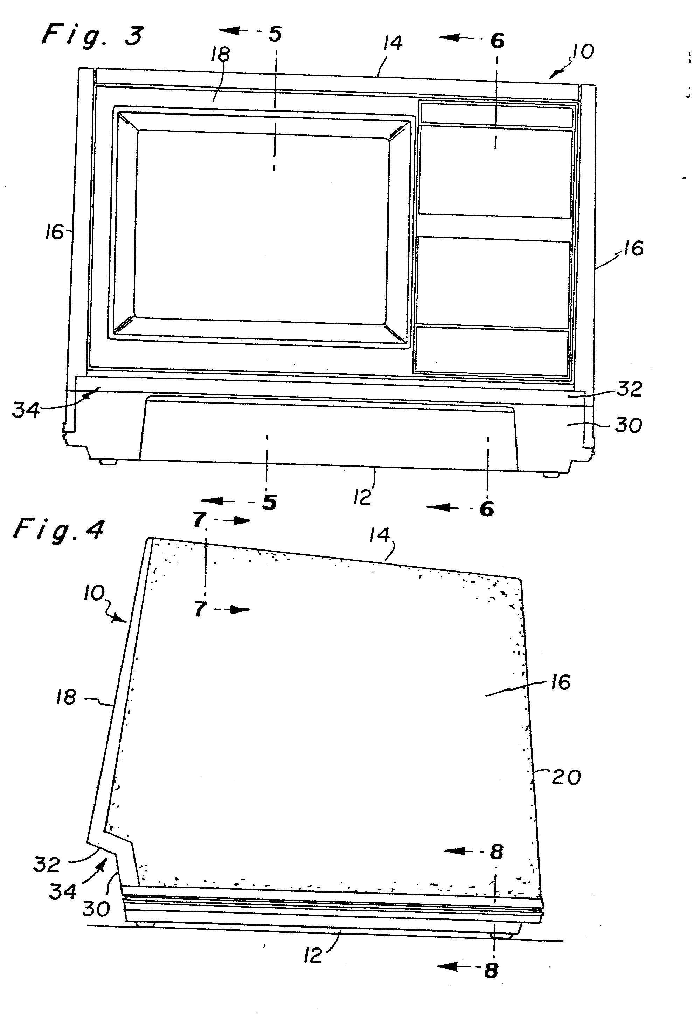

In accordance with this invention, the housing 10 may comprise a stand alone terminal such as illustrated in Figures 3-6 or may be part of a complete integrated system when coupled to a keyboard enclosure as illustrated in Figures 1-2. Similarly the keyboard enclosure itself may be used without being coupled to housing 10.

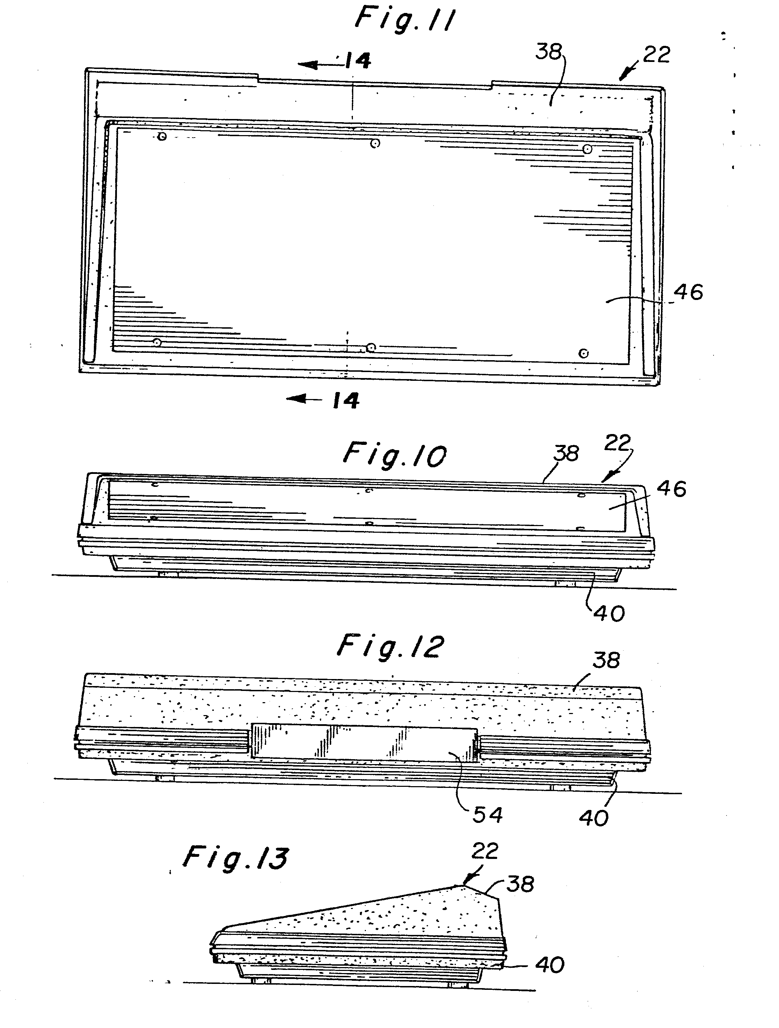

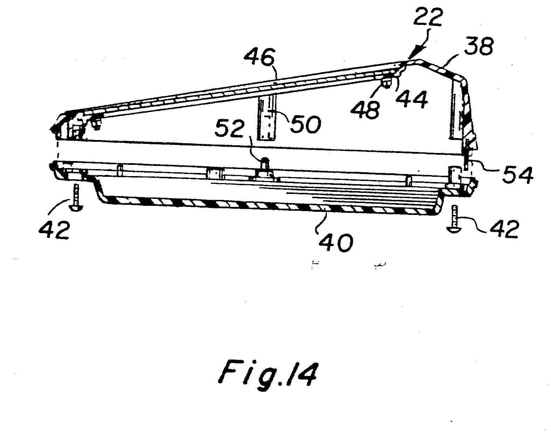

Figures 10-14 show the details of the keyboard unit or enclosure 22. As shown in Figure 14, keyboard unit 22 is essentially made in two main parts, namely a top cover member 38 and a bottom cover member 40, each of which would be injection molded as in using the techniques for forming the members of housing 10. The cover members 38 and 40 are detachably secured together using any suitable fasteners 42 in cooperation with the interfitting peripheral edges of the members. Top cover member 38 is a frame-like construction in its upper surface with its peripheral recess rim 44 defining an enlarged central opening. A keyboard panel 46 is then mounted in the recess rim 44 and secured thereto by suitable fasteners 48. The periphery of top cover member 38 includes indexing posts 50 into which are inserted indexing pins 52 from bottom cover member 40.

Keyboard unit 22 also includes a removable panel 54. Panel 54 provides the access or communication between keyboard unit 22 and housing 10. For example, panel 54 may be completely removed and a similar panel in housing 10 may be removed so that appropriate circuitry or cables could be placed in the opening created thereby. Alternatively, suitable holes may be formed in the panels for the electrical communications.

It is to be understood although the invention has been described with particular reference to a cathode ray tube terminal enclosure and a keyboard enclosure, the concepts of this invention may be practiced in connection with other instrument housings.

C L A I M S

1.      An instrument housing of the type including a base member and a top member and a plurality of side members, each of said members being made of a molded plastic material, characterized by the fact that each of said members is in the form of a generally flat panel, and all of said members are detachably secured together to form said housing whereby the size and dimensions of said housing may be varied by selective replacement of some of said members and whereby said members may be shipped and stored in a flat condition in kit form.

2.      A housing according to claim 1, characterized by the fact that the plurality of side members include a pair of intermediate side members and a front side member and a rear side member.

3.      A housing according to claim 1 or 2, characterized by the fact that the plastic material is a thermoplastic, and the members are injection molded.

4.      A housing according to any one of the preceding claims, characterized by a molded plastic keyboard unit secured at the front of the housing.

5.      A housing according to claim 4, characterized by the fact that the keyboard unit is detachable from the remainder of the housing.

6.      A housing according to claim 4 or 5 characterized by the fact that the keyboard unit comprises a bottom cover member detachably secured to a top cover member, said top cover member being of frame-like contruction in its upper surface with a peripheral recessed rim defining an enlarged central opening, and a keyboard panel mounted in said rim.

7.      A housing according to claim 6, characterized by the fact that it is a cathode ray tube terminal enclosure, the front side member including an opening for a cathode ray tube.

8.      A housing according to claim 7, characterized by the fact that the front side member further includes disk drive openings.

9.      A housing according to claim 8, characterized by the fact that the base member includes an upstanding wall terminating

CASE: LAF 16

in a forwardly extending flange detachably mounted to the front side member, said wall and said flange thereby forming a recess in the front surface of said housing, and the keyboard unit being mounted in said identation.

Fig. 1

Fig. 2

*Fig. 3*

*Fig. 4*

Fig.5

Fig.7

Fig.9

Fig.6

Fig.8

*Fig. 11*

*Fig. 10*

*Fig. 12*

*Fig. 13*

*Fig.14*